# EUROPEAN PATENT APPLICATION

(11) **EP 2 568 486 A1**
(43) Date of publication of application: **13.03.2013**
(21) Application number: 12275136.5
(22) Date of filing: 07.09.2012
(51) Int. Cl.: H01G 9/012, H01G 9/042

(54) **Tantalum capacitor**

(30) Priority: 08.09.2011 KR 20110091235
(71) Applicant: Samsung Electro-Mechanics Co., Ltd, Suwon, Gyunggi-Do (KR)
(72) Inventor: Cho, Tai Yon, Gyunggi-do (KR)
(74) Representative: Powell, Timothy John

(57) **Abstract**

There is provided a tantalum capacitor, including: a chip sintered body (11) formed by sintering a tantalum powder; and an anode lead-out line (12) formed of niobium (Nb) and having an insertion region positioned inside the chip sintered body (11) and a non-insertion region positioned outside of the chip sintered body (11), and thus, a niobium (Nb) wire is used as the anode lead-out line (12), thereby enhancing the binding force of the anode lead-out line (11) with the tantalum powder, so that equivalent series resistance (ESR) and leakage current (LC) characteristics may be improved.

## Description

### CROSS-REFERENCE TO RELATED APPLICATIONS

This application claims the priority of Korean Patent Application No. 10-2011-0091235 filed on September 8, 2011, in the Korean Intellectual Property Office, the disclosure of which is incorporated herein by reference.

### BACKGROUND OF THE INVENTION

### Field of the Invention

The present invention relates to a tantalum capacitor, and more particularly, to a tantalum capacitor capable of enhancing a binding force between an anode lead-out line and a tantalum powder and improving leakage current (LC) characteristics at the time of sintering.

### Description of the Related Art

Tantalum (Ta), a metal that is widely used in industries such as the aerospace industry and the defense industry, as well as in the mechanical engineering industry, the chemical industry, the medical industry, the electrical products industry and the electronics industry, due to having excellent mechanical and physical features such as a high melting point and corrosion-resistant properties.

In particular, among a wide variety of metals, the tantalum material can form a relatively more stable anode oxide film, and thus, has been widely used as an anode material for a small-sized capacitor.

Moreover, recently, the worldwide use of tantalum has sharply increased by approximately 10% every year, due to the rapid development of information technology (IT) industries such as the electronics industry and the information communications industry.

A tantalum capacitor has a structure in which a gap generated when a tantalum powder is sintered and coagulated is utilized. Tantalum oxide (Ta₂O₅) may be formed on a surface of tantalum as an electrode metal through an anodizing method. The formed tantalum oxide is used as a dielectric material, on which a manganese oxide (MnO₂) layer may be formed as an electrolyte.

In addition, due to the lead-out of a negative electrode, a graphite layer and a metal layer may be formed on the MnO₂ layer.

The tantalum capacitor is manufactured by inserting a tantalum wire in a tantalum powder mixed with a binder and performing molding and sintering to thereby prepare a tantalum sintered body; growing a chemical conversion coating film on a surface of the tantalum sintered body through an anodizing method, and then conducting a firing process thereon.

However, the tantalum powder, composed of nanoparticles, may be sintered at a relatively low sintering temperature during a sintering procedure, while the tantalum wire has bulk characteristics, and thus, the melting point thereof is relatively high, which may lead to weak binding force with the tantalum powder.

This may be an obstacle to improving equivalent series resistance (ESR) and leakage current (LC) characteristics.

### SUMMARY OF THE INVENTION

An aspect of the present invention provides a tantalum capacitor, capable of enhancing a binding force between an anode lead-out line and a tantalum powder and improving leakage current (LC) characteristics at the time of sintering.

According to an aspect of the present invention, there is provided a tantalum capacitor, including: a chip sintered body formed by sintering a tantalum powder; and an anode lead-out line formed of niobium (Nb) and having an insertion region positioned inside the chip sintered body and a non-insertion region positioned outside of the chip sintered body.

The chip sintered body may include a dielectric oxidation coating layer, a solid electrolytic layer having negative polarity, and a cathode reinforcement layer, sequentially coated on a surface thereof.

The solid electrolytic layer may be formed of at least one selected from the group consisting of manganese oxide (MnO₂) and a conductive polymer.

The conductive polymer may be at least one selected from the group consisting of polypyrrole, poly(3,4-ethylenedioxythiophene (PEDOT), and polyaniline.

The cathode reinforcement layer may be formed by sequentially layering carbon and silver (Ag).

According to another aspect of the present invention, there is provided a tantalum capacitor, including: a chip sintered body formed by sintering a tantalum powder and having a mounting surface; a cathode lead frame for allowing the chip sintered body to be mounted thereon; an anode lead-out line formed of niobium (Nb) and having an insertion region positioned inside the chip sintered body and a non-insertion region positioned outside of the chip sintered body; an anode lead frame connected to the non-insertion region of the anode lead-out line formed of niobium (Nb); and a resin molding part surrounding the chip sintered body and the anode lead-out line formed of niobium (Nb).

The chip sintered body may include a dielectric oxidation coating layer, a solid electrolytic layer having negative polarity, and a cathode reinforcement layer, sequentially coated on a surface thereof.

The solid electrolytic layer may be formed of at least one selected from the group consisting of manganese oxide (MnO₂) and a conductive polymer.

The conductive polymer may be at least one selected from the group consisting of polypyrrole, poly(3,4-ethylenedioxythiophene (PEDOT), and polyaniline.

The cathode reinforcement layer may be formed by sequentially layering carbon and silver (Ag).

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a schematic cross-sectional view of a chip sintered body of a tantalum capacitor according to an embodiment of the present invention;
FIG. 2 is a perspective view of a tantalum capacitor according to another embodiment of the present invention;
FIG. 3 is a cross-sectional view showing an internal structure of the tantalum capacitor according to another embodiment of the present invention; and
FIG. 4 is a graph comparing the leakage current (LC) between a tantalum capacitor including a tantalum (Ta) wire and a tantalum capacitor including a niobium (Nb) wire.

### DETAILED DESCRIPTION OF THE EMBODIMENTS

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions of elements may be exaggerated for clarity, and the same reference numerals will be used throughout to designate the same or like elements.

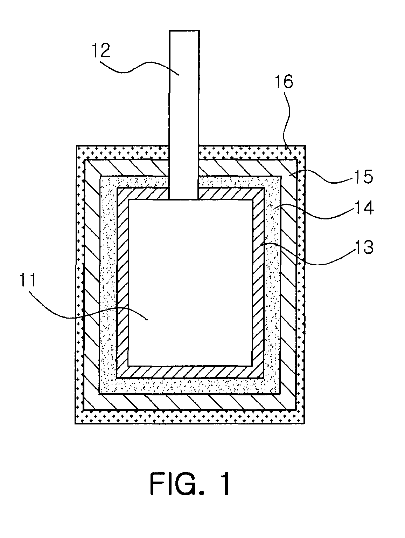

FIG. 1 is a schematic cross-sectional view of a chip sintered body of a tantalum capacitor according to an embodiment of the present invention.

Referring to FIG. 1, a tantalum capacitor according to an embodiment of the present invention may include a chip sintered body 11 formed by sintering a tantalum powder; and an anode lead-out line 12 formed of niobium (Nb) and having an insertion region positioned inside the chip sintered body and a non-insertion region positioned outside of the chip sintered body.

The chip sintered body 11 may be prepared by inserting the anode lead-out line into the tantalum powder mixed with the binder, molding a tantalum device having a required size, and sintering the tantalum device for about 30 minutes under the ambience of a strong vacuum (10⁻⁵ torr or less) and 1000∼2000°C.

In the tantalum capacitor according to the embodiment of the present invention, the anode lead-out line, inserted into the tantalum powder mixed with the binder, may be formed of a niobium (Nb) material.

Since the chip sintered body 11 is prepared by inserting the anode lead-out line 12 formed of niobium (Nb) into the tantalum powder mixed with the binder and then performing molding and sintering processes, according to the embodiment of the present invention, the binding force between the anode lead-out line 12 and the tantalum powder may be excellent.

The reason is that, since the tantalum device is sintered at a temperature of 1000∼2000°C, in the case in which a niobium (Nb) material having a low melting point, 2477°C, for example, is used for the anode lead-out line 12, the binding force between the anode lead-out line 12 and the tantalum powder may be excellent.

Specifically, the tantalum powder used in the tantalum device, composed of nanoparticles, is sintered at a low sintering temperature, 1000∼2000°C, but, in the case in which the anode lead-out line is formed of a tantalum material, the anode lead-out line has bulk characteristics, and thus, the melting point thereof may be 3000°C or higher.

In the case in which the tantalum powder mixed with the binder, into which the anode lead-out line formed of a tantalum material is inserted, is sintered at a temperature of 1000∼2000°C, as described above, the binding force between the anode lead-out line formed of a tantalum material having a high melting point and the tantalum powder may be lowered.

The tantalum capacitor manufactured as described above may be problematic in equivalent series resistance (ESR) and leakage current (LC) characteristics.

However, in the tantalum capacitor according to the embodiment of the present invention, the anode lead-out line is formed of a niobium (Nb) material having a relatively low melting point, and thus, the binding force of the anode lead-out line with the tantalum powder may be enhanced, so that equivalent series resistance (ESR) and leakage current (LC) characteristics may be improved.

Meanwhile, a dielectric oxidation coating layer 13, a solid electrolytic layer 14 having negative polarity, and cathode reinforcement layers 15 and 16 may be sequentially coated on the surface of the chip sintered body 11.

The chip sintered body 11 may be manufactured by mixing a binder and a powder such as a titanium (Ti) or a niobium (Nb) powder, besides the tantalum powder.

The dielectric oxidation coating layer 13 may be formed by growing an oxidation coating film (Ta₂O₅) on the surface of the chip sintered body 11 by a chemical conversion process using an electrochemical reaction.

The solid electrolytic layer 14 may be formed of at least one selected from the group consisting of, for example, manganese oxide (MnO₂) and a conductive polymer, but is not limited thereto.

The conductive polymer may be at least one selected from the group consisting of, for example, polypyrrole, poly(3,4-ethylenedioxythiophene (PEDOT), and polyaniline, but is not limited thereto.

The solid electrolytic layer 14 may have negative polarity by, for example, coating a nitric acid - manganese solution on a surface of the dielectric oxidation coating layer 13 and then performing a firing process, to thereby form manganese oxide (MnO₂).

In addition, the tantalum capacitor according to the embodiment of the present invention may further include the cathode reinforcement layers 15 and 16 of a conductive material formed on a surface of the solid electrolytic layer 14 in order to improve conductivity of the solid electrolytic layer.

The cathode reinforcement layers 15 and 16 may be formed by sequentially coating a carbon layer 15 and a silver (Ag) layer 16 on the surface of the solid electrolytic layer 14.

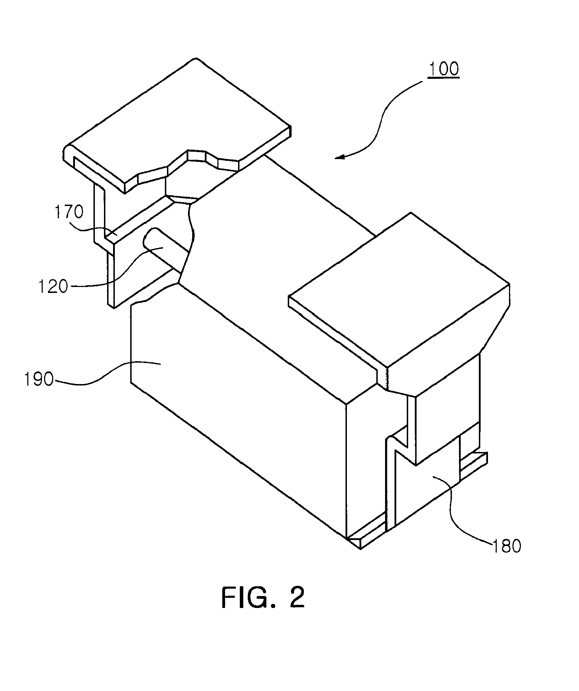

FIG. 2 is a perspective view of a tantalum capacitor according to another embodiment of the present invention.

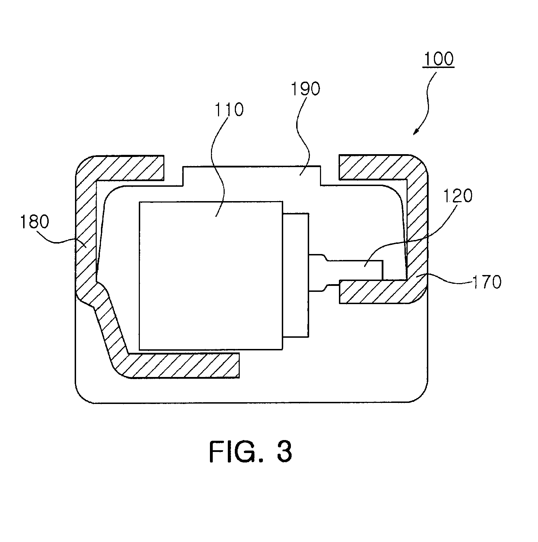

FIG. 3 is a cross-sectional view showing an internal structure of the tantalum capacitor according to another embodiment of the present invention.

Referring to FIGS. 2 and 3, a tantalum capacitor 100 according to another embodiment of the present invention may include a chip sintered body 110 formed by sintering a tantalum powder and having a mounting surface; a cathode lead frame 180 having the chip sintered body 110 mounted thereon; an anode lead-out line 120 formed of niobium (Nb) and having an insertion region positioned inside the chip sintered body 110 and a non-insertion region positioned outside of the chip sintered body 110; an anode lead frame 170 connected to the non-insertion region of the anode lead-out line 120 formed of niobium (Nb); and a resin molding part 190 surrounding the chip sintered body 110 and the anode lead-out line 120 formed of niobium (Nb).

The tantalum capacitor according to the embodiment of the present invention may include the chip sintered body 110 formed by sintering a tantalum powder and having the mounting surface.

The method of preparing the chip sintered body 110 is the same as that described above, and thus, the descriptions thereof will be omitted.

In addition, a dielectric oxidation coating layer, a solid electrolytic layer having negative polarity, and cathode reinforcement layers may be sequentially coated on a surface of the chip sintered body 110, (not shown).

Features of the dielectric oxidation coating layer, the solid electrolytic layer, and the cathode reinforcement layers are the same as those described in the above embodiment of the present invention.

The tantalum capacitor according to another embodiment of the present invention may include the anode lead-out line 120 formed of niobium (Nb) and having the insertion region positioned inside the chip sintered body 110 and the non-insertion region positioned outside of the chip sintered body 110.

As such, since the anode lead-out line 120 is formed of a niobium (Nb) material having a relatively low melting point, the binding force of the anode lead-out line 120 with the tantalum powder may be enhanced, so that equivalent series resistance (ESR) and leakage current (LC) characteristics may be improved.

The chip sintered body 110 having the mounting surface may be attached to the cathode lead frame 180 by using a silver (Ag) paste.

In addition, the non-insertion region of the anode lead-out line 120 formed of niobium (Nb) may be connected to the anode lead frame 170.

The method of connecting the anode lead-out line 120 and the anode lead frame 170 to each other may be conducted by, but particularly limited to, for example, attachment by electric wielding, and particularly, the wielding may be performed by an electric spot wielding method.

In addition, the tantalum capacitor according to another embodiment of the present invention may include the resin molding part 190 surrounding the chip sintered body 110 and the anode lead-out line 120 formed of niobium (Nb).

A material for the resin molding part 190 is not particularly limited, and the resin molding part 190 may be formed by molding using an epoxy to surround the chip sintered body 110 and the anode lead-out line 120 formed of niobium (Nb) .

The resin molding part 190 may serve to form the tantalum capacitor to have a shape such that the chip sintered body 110 is protected and the tantalum capacitor is easily mounted on a printed circuit board (PCB).

In the tantalum capacitor according to the embodiment of the present invention, a niobium (Nb) wire is used as the anode lead-out line, and thus, the binding force of the anode lead-out line with the tantalum powder may be enhanced at the time of sintering, so that equivalent series resistance (ESR) and leakage current (LC) characteristics may be improved.

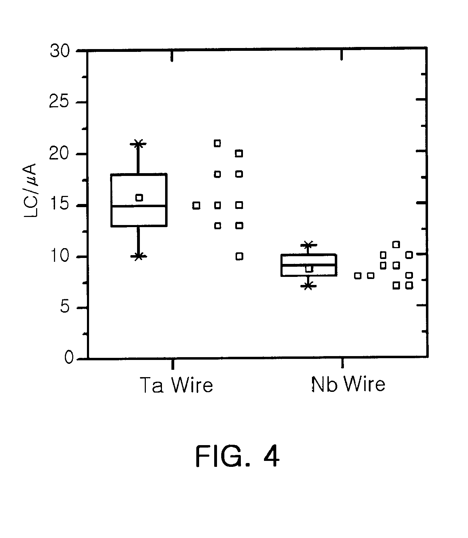

FIG. 4 is a graph comparing the leakage current (LC) between a tantalum capacitor including a tantalum (Ta) wire and a tantalum capacitor including a niobium (Nb) wire.

It can be seen from FIG. 4, that, in the case of the tantalum capacitor manufactured by using a tantalum (Ta) wire, a leakage current (LC) thereof is average 15 µA, and in the case of the tantalum capacitor manufactured by using a niobium (Nb) wire, a leakage current (LC) thereof is average 10 µA, which shows about 33% improvement as compared with the tantalum capacitor manufactured by using a tantalum (Ta) wire.

Therefore, in the tantalum capacitor according to the embodiment of the present invention, the niobium (Nb) wire is used for the anode lead-out line, thereby obtaining excellent leakage current (LC) characteristics.

As set forth above, according to embodiments of the present invention, a niobium (Nb) wire is used as the anode lead-out line, and thus, the binding force of the anode lead-out line with the tantalum powder may be enhanced at the time of sintering, so that equivalent series resistance (ESR) and leakage current (LC) characteristics may be improved.

While the present invention has been shown and described in connection with the embodiments, it will be apparent to those skilled in the art that modifications and variations can be made without departing from the spirit and scope of the invention as defined by the appended claims.

## Claims

1. A tantalum capacitor, comprising:
a chip sintered body formed by sintering a tantalum powder; and
an anode lead-out line formed of niobium (Nb) and having an insertion region positioned inside the chip sintered body and a non-insertion region positioned outside of the chip sintered body.

2. The tantalum capacitor of claim 1, wherein the chip sintered body includes a dielectric oxidation coating layer, a solid electrolytic layer having negative polarity, and a cathode reinforcement layer, sequentially coated on a surface thereof.

3. The tantalum capacitor of claim 2, wherein the solid electrolytic layer is formed of at least one selected from the group consisting of manganese oxide (MnO₂) and a conductive polymer.

4. The tantalum capacitor of claim 3, wherein the conductive polymer is at least one selected from the group consisting of polypyrrole, poly(3,4-ethylenedioxythiophene (PEDOT), and polyaniline.

5. The tantalum capacitor of claim 2, wherein the cathode reinforcement layer is formed by sequentially layering carbon and silver (Ag).

6. A tantalum capacitor, comprising:
a chip sintered body formed by sintering a tantalum powder and having a mounting surface;
a cathode lead frame for allowing the chip sintered body to be mounted thereon;
an anode lead-out line formed of niobium (Nb) and having an insertion region positioned inside the chip sintered body and a non-insertion region positioned outside of the chip sintered body;
an anode lead frame connected to the non-insertion region of the anode lead-out line formed of niobium (Nb); and
a resin molding part surrounding the chip sintered body and the anode lead-out line formed of niobium (Nb).

7. The tantalum capacitor of claim 6, wherein the chip sintered body includes a dielectric oxidation coating layer, a solid electrolytic layer having negative polarity, and a cathode reinforcement layer, sequentially coated on a surface thereof.

8. The tantalum capacitor of claim 7, wherein the solid electrolytic layer is formed of at least one selected from the group consisting of manganese oxide (MnO₂) and a conductive polymer.

9. The tantalum capacitor of claim 8, wherein the conductive polymer is at least one selected from the group consisting of polypyrrole, poly(3,4-ethylenedioxythiophene (PEDOT), and polyaniline.

10. The tantalum capacitor of claim 7, wherein the cathode reinforcement layer is formed by sequentially layering carbon and silver (Ag).
